# EUROPEAN PATENT APPLICATION

(11) **EP 3 561 291 A1**
(43) Date of publication of application: **30.10.2019**
(21) Application number: 18748389.6
(22) Date of filing: 30.01.2018
(51) Int. Cl.: F02N 11/10, F02N 11/00, F02N 15/02, F16D 11/10, F16D 13/46, F16D 23/06, F16D 27/00, F16H 3/44, H02K 7/116

(54) **POWER TRANSMITTING DEVICE WITH DYNAMO-ELECTRIC MACHINE**

(30) Priority: 31.01.2017 JP 2017014996
(71) Applicant: Exedy Corporation, Neyagawa-shi, Osaka 572-8570 (JP)
(72) Inventor: SATO, Keiji, Neyagawa-shi Osaka 572-8570 (JP); KATSURA, Hitoshi, Neyagawa-shi Osaka 572-8570 (JP); KITAMURA, Taichi, Neyagawa-shi Osaka 572-8570 (JP)
(74) Representative: KASTEL Patentanwälte PartG mbB
(86) International application number: PCT/JP2018/002898
(87) International publication number: WO 2018/143172

(57) **Abstract**

In a power transmitting apparatus (3) with rotary electrical machine disposed in a power transmission path from an output shaft (7) of an internal combustion engine (2) to a transmission (4) in a vehicle (1), the power transmitting apparatus includes a rotary electrical machine (5) disposed coaxially with the output shaft, and a transmission apparatus (9) disposed adjacent to the power transmitting apparatus and the rotary electrical machine. The transmission apparatus can mechanically switch at least two power transmission paths having different reduction ratios between one of an outer shell of the power transmitting apparatus and a synchronous rotation member (8) that rotates synchronously with the outer shell and a rotor (11) of the rotary electrical machine.

## Description

### TECHNICAL FIELD

The present invention relates to a power transmitting apparatus with rotary electrical machine that integrates a power generation function and an engine start function of a vehicle's alternator and a vehicle's starter motor.

### BACKGROUND ART

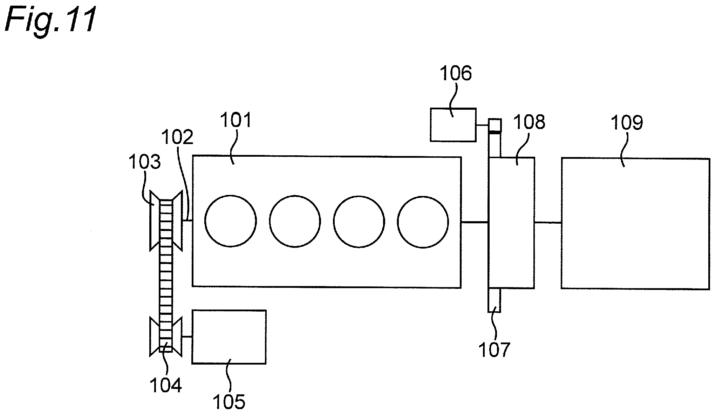

Conventionally, as a power generation apparatus for a vehicle, as shown in Fig. 11, an alternator 105 connected to a pulley 103 provided at a crankshaft end 102 of an internal combustion engine 101 via a V-belt 104 is known.

Further, an apparatus in which the alternator 105 is additionally provided with a driving function to be capable of starting an internal combustion engine in a warm state (after a warm-up) (refer to integrated starter generators (ISGs) disclosed in PTLs 1 to 3) and further performing a driving force assist while a vehicle is travelling, or the like is known.

### CITATION LIST

### PATENT LITERATURE

PTL 1: JP 4782348 B2
PTL 2: JP 4787242 B2
PTL 3: JP 2009-508464 A

### SUMMARY OF INVENTION

### TECHNICAL PROBLEM

However, the method for starting an internal combustion engine described above may fail to start the engine in a cold state. This is because in the cold state, a decrease in temperature of a lubricating oil in the internal combustion engine causes increases in viscosity of the lubricating oil and in agitating resistance during startup, and a decrease in friction coefficient between the V-belt 104 and the pulley 103 causes slippage to occur between the V-belt 104 and the pulley 103, thereby preventing a rotational driving force of the alternator 105 from being transmitted to the internal combustion engine 101.

To address such a problem, a vehicle equipped with such an apparatus includes, without exception, a starter motor 106 in addition to the alternator 105 for the cold start of an internal combustion engine. Note that, in Fig. 11, a ring gear is denoted by 107, a starting apparatus such as a torque converter is denoted by 108, and a transmission is denoted by 109.

Accordingly, an object of the present invention, having been conceived to solve the problem, is to provide a power transmitting apparatus with rotary electrical machine in which an internal combustion engine and the rotary electrical machine coupled with each other without a V-belt and a pulley to enable a reliable cold start.

### SOLUTION TO PROBLEM

In order to achieve the above-described object, the present invention is constructed as below.

According to one aspect of the present invention, there is provided a power transmitting apparatus with rotary electrical machine disposed in a power transmission path from an output shaft of an internal combustion engine to a transmission in a vehicle, the power transmitting apparatus comprising:
a rotary electrical machine disposed coaxially with the output shaft; and
a transmission apparatus disposed adjacent to the power transmitting apparatus and the rotary electrical machine, the transmission apparatus being capable of mechanically switching at least two power transmission paths having different reduction ratios between one of an outer shell of the power transmitting apparatus and a synchronous rotation member that rotates synchronously with the outer shell and a rotor of the rotary electrical machine.

### ADVANTAGEOUS EFFECTS OF INVENTION

According to the aspect of the present invention, the transmission apparatus is disposed adjacent to the power transmitting apparatus and the rotary electrical machine, and the at least two power transmission paths having different reduction ratios between the outer shell of the power transmitting apparatus or the synchronous rotation member that rotates synchronously with the outer shell and the rotor of the rotary electrical machine can be mechanically switched, which enables, without a V-belt and a pulley, a rotational driving force of the rotary electrical machine to be reliably transmitted to the internal combustion engine even in a cold state and enables a reliable cold start of the internal combustion engine.

### BRIEF DESCRIPTION OF DRAWINGS

These and other aspects and features of the present invention will become clear from the following description taken in conjunction with the embodiments thereof with reference to the accompanying drawings, in which:
Fig. 1 is an explanatory diagram showing components of a rotary electrical machine, an engagement and disengagement mechanism, and the like as a half cross section taken along a rotational axis in an example of a power transmitting apparatus with rotary electrical machine according to a first embodiment of the present invention;
Fig. 2 is an exploded perspective view of the engagement and disengagement mechanism;
Fig. 3 is an exploded perspective view of the engagement and disengagement mechanism when engaging protrusions of an engaging ring are positioned at a first protruding position;
Fig. 4 is an exploded perspective view of the engagement and disengagement mechanism when the engaging protrusions of the engaging ring are positioned at a second protruding position;
Fig. 5A is a front view of the engagement and disengagement mechanism when the engaging protrusions of the engaging ring start to move from the first protruding position to the second protruding position;
Fig. 5B is a front view of the engagement and disengagement mechanism while the engaging protrusions of the engaging ring are moving from the first protruding position to the second protruding position;
Fig. 5C is a front view of the engagement and disengagement mechanism when the engaging protrusions of the engaging ring reach the second protruding position;
Fig. 5D is a front view of the engagement and disengagement mechanism when the engaging protrusions of the engaging ring start to move from the second protruding position to the first protruding position;
Fig. 5E is a front view of the engagement and disengagement mechanism while the engaging protrusions of the engaging ring are moving from the second protruding position to the first protruding position;
Fig. 5F is a front view of the engagement and disengagement mechanism when the engaging protrusions of the engaging ring are positioned at the first protruding position;
Fig. 6A is a partial front view of the engagement and disengagement mechanism with a hub ring broken out when the engaging protrusions of the engaging ring start to move from the first protruding position to the second protruding position;
Fig. 6B is a partial front view of the engagement and disengagement mechanism with the hub ring broken out while the engaging protrusions of the engaging ring are moving from the first protruding position to the second protruding position;
Fig. 6C is a partial front view of the engagement and disengagement mechanism with the hub ring broken out when the engaging protrusions of the engaging ring reach the second protruding position;
Fig. 6D is a partial front view of the engagement and disengagement mechanism with the hub ring broken out when the engaging protrusions of the engaging ring start to move from the second protruding position to the first protruding position;
Fig. 6E is a partial front view of the engagement and disengagement mechanism with the hub ring broken out while the engaging protrusions of the engaging ring are moving from the second protruding position to the first protruding position;
Fig. 6F is a partial front view of the engagement and disengagement mechanism with the hub ring broken out when the engaging protrusions of the engaging ring are positioned at the first protruding position;
Fig. 7 is a collinear chart showing a state where the power transmitting apparatus with rotary electrical machine according to the first embodiment is in operation;
Fig. 8 is a partial side view of the hub ring and the engaging ring in a state where positions of the hub ring and the engaging ring in an inside and outside directions have been interchanged in a modification of the first embodiment;
Fig. 9 is an explanatory diagram showing components of a rotary electrical machine, an engagement and disengagement mechanism, and the like as a half cross section taken along a rotational axis in an example of a power transmitting apparatus with rotary electrical machine according to a second embodiment of the present invention;
Fig. 10A is an explanatory diagram showing components of a rotary electrical machine, an engagement and disengagement mechanism, and the like, as a half cross section taken along a rotational axis with a sun gear and a pinion carrier synchronized with each other (in other words, "in engagement with each other") in an example of a power transmitting apparatus with rotary electrical machine according to a third embodiment of the present invention;
Fig. 10B is an explanatory diagram showing components of a rotary electrical machine, an engagement and disengagement mechanism, and the like, as a half cross section taken along the rotational axis with the sun gear and a stationary end synchronized with each other in the example of the power transmitting apparatus with rotary electrical machine according to the third embodiment of the present invention;
Fig. 10C is an explanatory diagram showing an example of an actual shape of a synchronizing mechanism (quoted from http://www.jidoshaseibishi.com/commentary/chassis/synchrome sh/synchromesh.htm) that can be adopted to the power transmitting apparatus with rotary electrical machine according to the third embodiment of the present invention; and
Fig. 11 is an explanatory diagram showing a relation among a conventional internal combustion engine, starter motor, and alternator.

### DESCRIPTION OF EMBODIMENTS

Hereinafter, a first embodiment of the present invention will be described in detail with reference to the drawings. Note that, in description of each embodiment, the same components or portions are denoted by the same reference numeral, and redundant description will be omitted.

### <First embodiment>

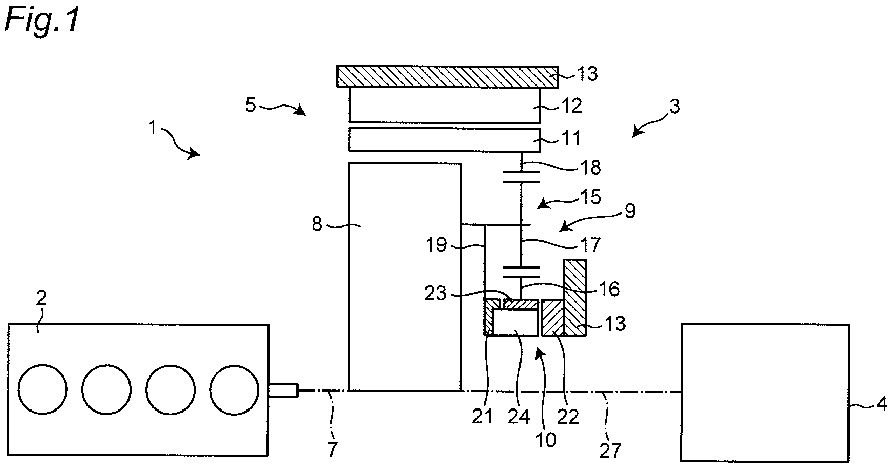

As shown in Fig. 1, a power transmitting apparatus with rotary electrical machine according to a first embodiment of the present invention has a configuration shown in Fig. 1 in which a power transmitting apparatus 3 such as a clutch or a torque converter is combined with a rotary electrical machine 5 to integrate respective functions of an integrated starter generator (ISG) and a starter motor, thereby bringing about advantages in terms of cost and space. Such a configuration in which a transmission apparatus 9 is provided to implement a plurality of functions enables, even in a cold state, a rotational driving force of the rotary electrical machine 5 to be reliably transmitted to an internal combustion engine such as an engine 2 and thus enables a reliable cold start of the engine 2.

Furthermore, in the embodiment of the present invention, when the rotary electrical machine 5 is disposed in combination with the power transmitting apparatus 3, a power generation function and an engine start function of an alternator and a starter motor are integrated to enable the rotary electrical machine 5 to perform both the functions in order to reduce the cost and space.

More specifically, as shown in Fig. 1, such a power transmitting apparatus 3 with rotary electrical machine is disposed in a power transmission path extending from an output shaft 7 of the engine 2 to the transmission 4 in a vehicle 1.

This power transmitting apparatus 3 includes at least the rotary electrical machine 5 disposed coaxially with the output shaft 7, and the transmission apparatus 9 that is disposed adjacent to the power transmitting apparatus 3 and the rotary electrical machine 5 and is capable of mechanically switching at least two power transmission paths having different reduction ratios between an outer shell of the power transmitting apparatus 3 or a synchronous rotation member 8 that rotates synchronously (rotates integrally) with the outer shell and a rotor 11 of the rotary electrical machine 5.

Such a configuration will be described in detail below.

The rotary electrical machine 5 includes a stator 12 fixed to a stationary end 13 such as a case and the rotor 11 that rotates relative to the stator 12. A rotation axis of the rotor 11 is coaxial with the output shaft 7.

The outer shell 8 of the power transmitting apparatus 3 can be constituted by an outer shell of a friction clutch (for example, a clutch cover), an outer shell of a torque converter, or an outer shell of a fluid coupling. Examples of the synchronous rotation member 8 that rotates synchronously (rotates integrally) with the outer shell 8 include a drive plate of the torque converter coupled with the output shaft of the engine 2 for synchronous rotation, a drive plate coupled on a side of the internal combustion engine of the fluid coupling, a flywheel coupled on a side of the internal combustion engine of the friction clutch, and a member coupled on a side of the internal combustion engine of an electromagnetic clutch.

As an example, the transmission apparatus 9 includes a planetary gear mechanism 15 disposed coaxially with the output shaft 7 of the engine 2 and the rotary electrical machine 5, and an engagement and disengagement mechanism 10 capable of restricting or allowing relative rotation between a sun gear 16 and a pinion carrier 19 of the planetary gear mechanism 15, or between the sun gear 16 and the stationary end 13.

The planetary gear mechanism 15 includes the sun gear 16, a plurality of pinion gears 17, a ring gear 18, and the pinion carrier 19.

Each of the pinion gears 17 is in mesh with the ring gear 18 and the sun gear 16.

The ring gear 18 is in mesh with the plurality of pinion gears 17. The ring gear 18 is connected to the rotor 11 and rotates integrally with the rotor 11.

The pinion carrier 19 supports the plurality of pinion gears 17 with the pinion gears 17 rotatable, and is connected to the outer shell of the power transmitting apparatus 3 or the synchronous rotation member 8 (hereinafter, referred to as a synchronous rotation member of the power transmitting apparatus 3) that rotates synchronously with the outer shell to rotate integrally with the outer shell or the synchronous rotation member 8.

The plurality of pinion gears 17 are arranged around and in mesh with the sun gear 16, and the engagement and disengagement mechanism 10 (to be described later) is configured to utilize a configuration where rotation of the sun gear 16 is reversed between a start mode and a power generation mode to automatically switch the paths.

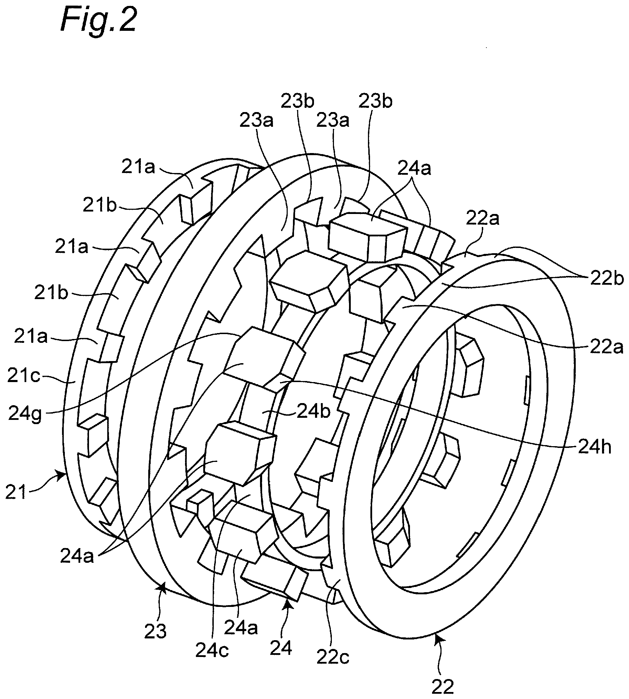

Further, as shown in Figs. 2 to 4, the engagement and disengagement mechanism 10 includes a first pawl ring 21, a second pawl ring 22, a hub ring 23, and an engaging ring 24, and is capable of performing a clutch function and a brake function.

The engaging ring 24 is inserted into and engaged with the hub ring 23 and is disposed between the first pawl ring 21 and the second pawl ring 22 to be rotatable integrally with the hub ring 23 in normal and reverse directions. The engaging ring 24 is further slidable on the hub ring 23 in an axial direction.

The first pawl ring 21 is disposed at one end (for example, a side of the engine) of the engagement and disengagement mechanism 10 in the axial direction of a rotational shaft 27 coaxial with the output shaft 7 and is connected to the pinion carrier 19 to rotate integrally with the pinion carrier 19 in the normal and reverse directions. The first pawl ring 21 includes, on one side portion thereof, a number of first protrusions 21a that are arranged at equal intervals along a circumferential direction and protruded from a first annular portion 21c toward the engaging ring 24, and a first depression 21b between first protrusions 21a adjacent to each other. Each of the first protrusions 21a is rectangle in plan view, for example.

The second pawl ring 22 is disposed at the other end (for example, a side of the transmission) of the engagement and disengagement mechanism 10 in the axial direction of the rotational shaft 27 and fixed to the stationary end 13. The second pawl ring 22 and the first pawl ring 21 are plane symmetrical, and the second pawl ring 22 includes, on one side portion thereof, a number of second protrusions 22a that are arranged at equal intervals along the circumferential direction and protruded from a second annular portion 22c toward the engaging ring 24, and a second depression 22b between second protrusions 22a adjacent to each other. Each of the second protrusions 22a is rectangle in plan view, for example.

The hub ring 23 is connected to the sun gear 16 to rotate integrally with the sun gear 16 in the normal and reverse directions between the first pawl ring 21 and the second pawl ring 22. The hub ring 23 includes a number of third protrusions 23a that are arranged at equal intervals along the circumferential direction and protruded from a third annular portion 23c toward a center in a radial direction of the hub ring 23, and a third depression 23b between third protrusions 23a adjacent to each other. Each of the third protrusions 23a is rectangle in plan view, for example.

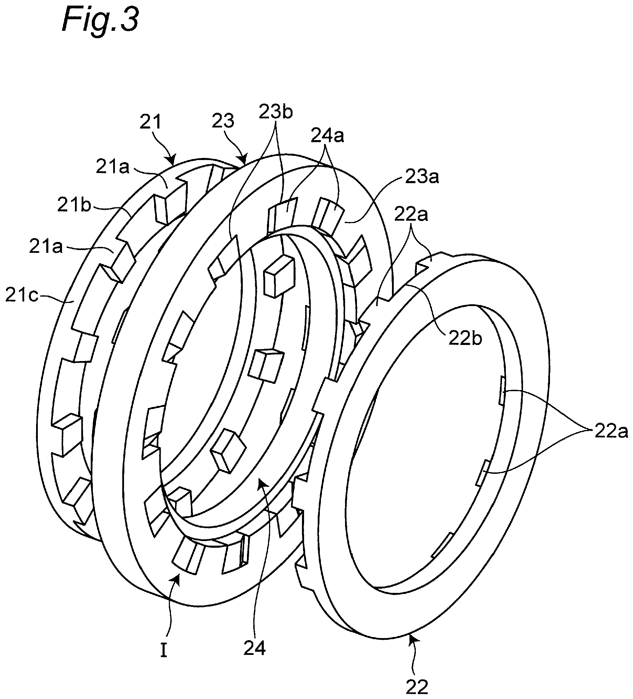

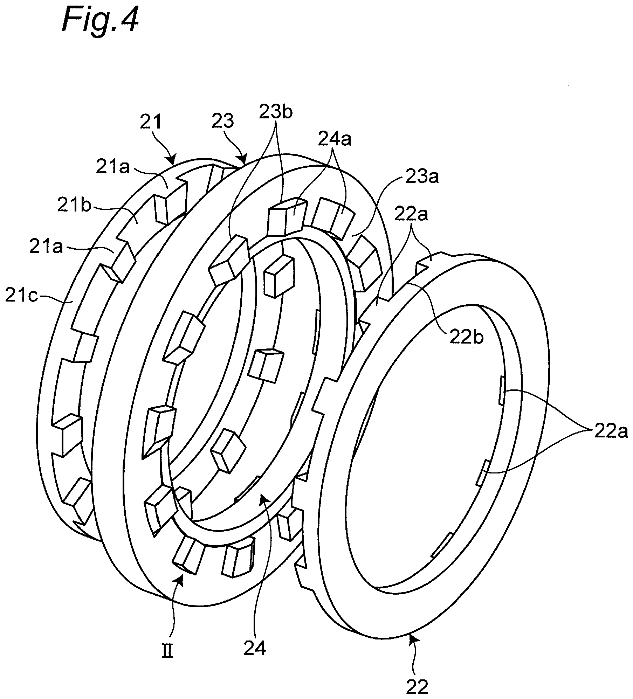

The engaging ring 24 is disposed inside the hub ring 23 in the radial direction, engages with the hub ring 23 to rotate integrally with the hub ring 23 in the normal and reverse directions and to be movable forward and backward in the axial direction of the output shaft 7, and has engaging protrusions 24a that can alternately engage with the first protrusions 21a and the second protrusions 22a. Specifically, the engaging ring 24 includes a number of the engaging protrusions 24a that are arranged at equal intervals along the circumferential direction and protruded outward in the radial direction from a fourth annular portion 24c, and a fourth depression 24b between engaging protrusions 24a adjacent to each other. Each of the engaging protrusions 24a is rectangle in plan view, for example, and has a first inclined surface 24g and a second inclined surface 24h formed at a pair of opposite corners, for example, at an upper left corner and lower right corner by chamfering or the like. Each of the engaging protrusions 24a is longer in the axial direction than that of the engaging ring 24, and either the first inclined surface 24g or the second inclined surface 24h protrudes, without exception, from the engaging ring 24 in the axial direction to be engageable with the first protrusions 21a or the second protrusions 22a. The engaging protrusions 24a of the engaging ring 24 engage with the second depressions 23b of the hub ring 23 on a one-to-one basis, and the third protrusions 23a of the hub ring 23 engage with the fourth depressions 24b of the engaging ring 24 on a one-to-one basis, causing the hub ring 23 and the engaging ring 24 to engage with each other in a rotation direction to prevent relative rotation but allow integral rotation in the normal and reverse directions while allowing the engaging ring 24 to move forward and backward in the axial direction relative to the hub ring 23 between a first protruding position I (see Figs. 3, 5A, and 6A) where the engaging ring 24 protrudes toward the first pawl ring 21 and a second protruding position II (see Figs. 4, 5F, and 6F) where the engaging ring 24 protrudes toward the second pawl ring 22.

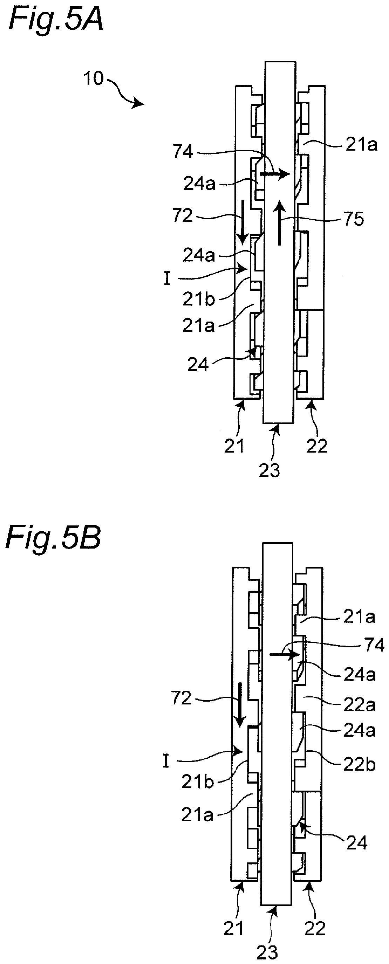

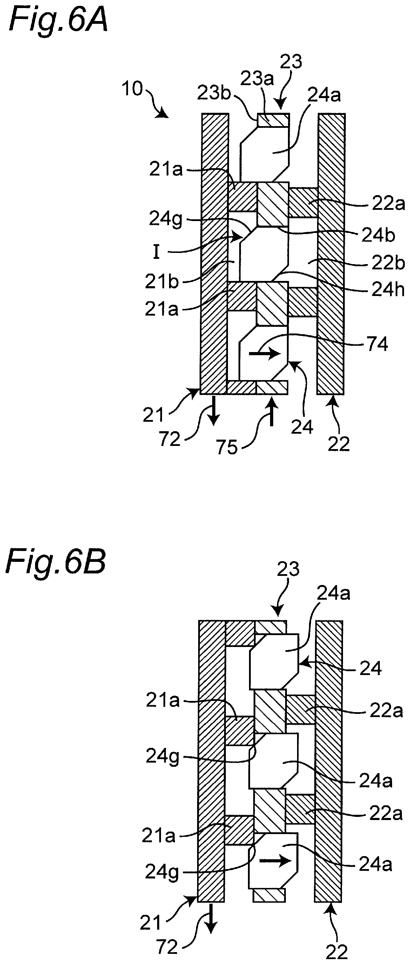

The engagement and disengagement mechanism 10 configured as described above operates as shown in Figs. 5A to 5F that are external views of the engagement and disengagement mechanism 10 and as shown in Figs. 6A to 6F with the hub ring 23 broken out.

At the first protruding position I of the engaging protrusion 24a, as shown in Figs. 5A and 6A, lower right corner portions of the first protrusions 21a of the first pawl ring 21 are slidable on the first inclined surfaces 24g. At this time, as shown in Figs. 5A to 5B and Figs. 6A to 6B, rotation of the first pawl ring 21 in a direction indicated by a downward arrow 72 and rotation of the engaging ring 24 in a direction indicated by an upward arrow 75 cause the lower right corner portions of the first protrusions 21a to come into contact with the first inclined surfaces 24g and move downward, thereby causing the engaging protrusions 24a having the first inclined surfaces 24g to gradually move rightward (see an arrow 74). This starts movement from the first protruding position I to the second protruding position II.

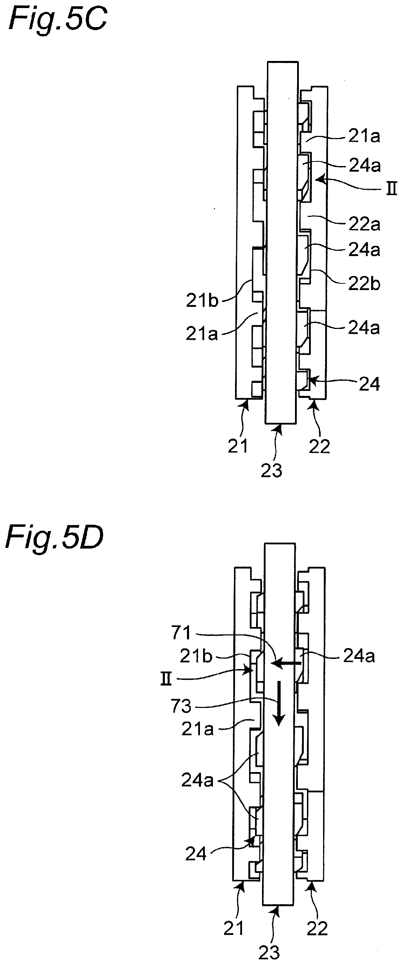

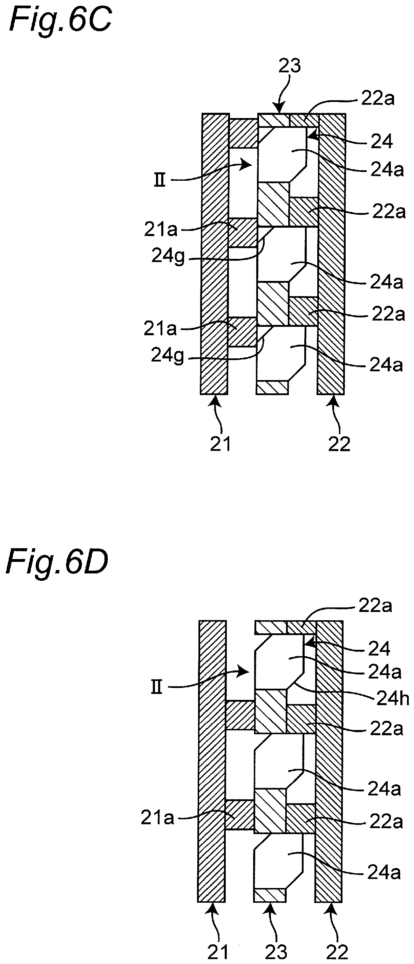

After a state shown in Figs. 5B and 6B, as shown in Figs. 5C and 6C, the lower right corner portions of the first protrusions 21a further move and then reach lower end edges of the first inclined surfaces 24g, which corresponds to a state where the engaging ring 24 has completed the movement from the first protruding position I to the second protruding position II. At this second protruding position II, an upper surface of each of the engaging protrusions 24a enter each of the second depressions 22b of the second pawl ring 22, and come into contact with a lower surface of the second protrusion, thereby causing the engaging ring 24 and the second pawl ring 22 to engage with each other to prevent relative rotation. At this time, since the second pawl ring 22 is fixed to the stationary end 13 in a non-rotatable manner, the engaging ring 24 stops rotating, and the hub ring 23 and the sun gear 16 stops rotating accordingly. Note that the first pawl ring 21 is freely rotatable in the normal and reverse directions.

On the other hand, after each of the engaging protrusions 24a moves to the second protruding position II and the engaging ring 24 stops rotating, the engaging ring 24 is rotated, via the sun gear 16 and the hub ring 23, in the reverse direction that is opposite to a previous direction, that is, in the reverse direction that is a downward direction (see an arrow 73) rather than an upward direction as shown in Figs. 5D and 6D. At that time, the engaging protrusions 24a separate from the lower surfaces of the second protrusions 22a of the second pawl ring 22 and slightly move within the second depressions 22b in the circumferential direction. This rotation in the reverse direction indicates that a driving and driven relation between the engine 2 and the rotary electrical machine 5 is reversed between the start mode and the power generation mode, and a direction of a reaction force applied to the sun gear 16 is reversed.

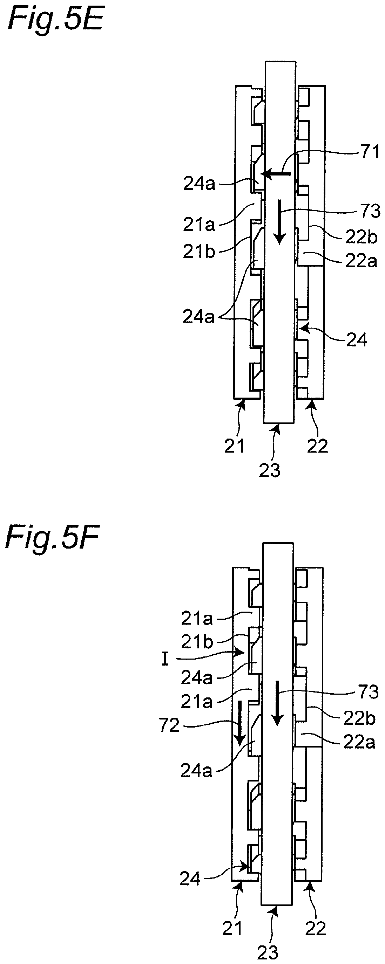

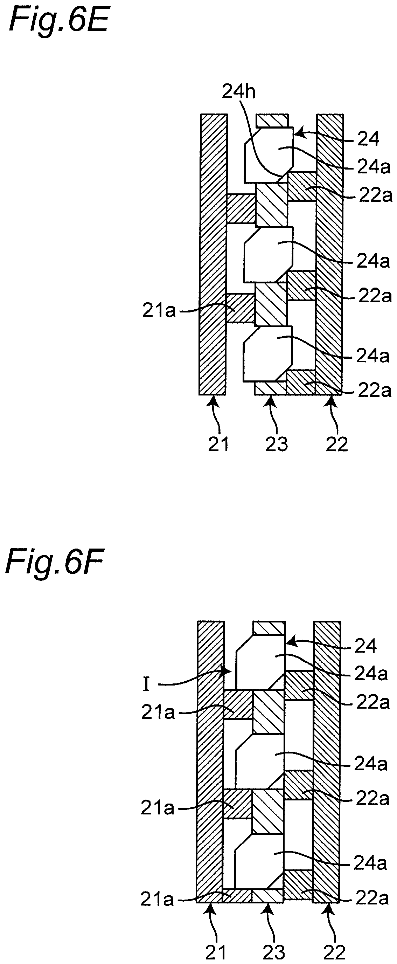

Subsequently, as shown in Figs. 5E and 6E, the rotation of the engaging ring 24 in the direction indicated by the downward arrow 73 causes upper left corner portions of the second protrusions 22a to move upward on the second inclined surfaces 24h of the engaging protrusions 24a, thereby causing the engaging protrusions 24a having the second inclined surfaces 24h to gradually move leftward (see an arrow 71). This starts movement from the second protruding position II to the first protruding position I.

After a state shown in Figs. 5E and 6E, as shown in Figs. 5F and 6F, the upper left corner portions of the second protrusions 22a further move to and then reach upper end edges of the second inclined surfaces 24h, which corresponds to a state where the engaging ring 24 has completed the movement from the second protruding position II to the first protruding position I. At this first protruding position I, a lower surface of each of the engaging protrusions 24a enter each of the first depressions 21b of the first pawl ring 21, and come into contact with an upper surface of each of the first protrusions 21a, thereby causing the engaging ring 24 and the first pawl ring 21 to engage with each other to prevent relative rotation. Accordingly, the engaging ring 24 and the first pawl ring 21 rotate integrally downward (see the arrows 73, 72).

Here, respective meanings of "engagement" and "disengagement" of the engagement and disengagement mechanism 10 do not indicate an absolute state but a relative state. That is, in the engagement and disengagement between the engaging ring 24 (including the hub ring 23) and the first pawl ring 21, and the engagement and disengagement between the engaging ring 24 (including the hub ring 23) and the second pawl ring 22, a state where the two rings are synchronized with each other is denoted by "engagement", and a state where the two rings are not synchronized with each other (that is, a state where there is a difference in rotation, in other words, a state where relative rotation is allowed) is denoted by "disengagement". The engagement and disengagement between the engaging ring 24 and the first pawl ring 21 and the engagement and disengagement between the engaging ring 24 and the second pawl ring 22 cooperate with each other to bring about mutually different engagement and disengagement states at all the time.

Specifically, as shown in Figs. 5A to 5C and Figs. 6A to 6C, the movement (see the arrow 74) of the engaging ring 24 toward the second pawl ring 22 in the axial direction (rightward in Figs. 5A to 5C and Figs. 6A to 6C) causes the engaging protrusions 24a of the engaging ring 24 to move from the first protruding position I to the second protruding position II along the axial direction of the rotational shaft 27 and reach the second protruding position II. At that time, a state between the engaging ring 24 and the second pawl ring 22 becomes "engagement", and a state between the engaging ring 24 and the first pawl ring 21 becomes "disengagement". Therefore, the engaging ring 24 and the second pawl ring 22 that are in "engagement" with each other stop rotating, but, between the engaging ring 24 and the first pawl ring 21 that are in "disengagement" from each other, the first pawl ring 21 is allowed in the normal and reverse directions relative to the engaging ring 24 that stops rotating.

On the other hand, as shown in Figs. 5D to 5F and Figs. 6D to 6F, the movement (see the arrow 71) of the engaging ring 24 toward the first pawl ring 21 in the axial direction (leftward in Figs. 5D to 5F and Figs. 6D to 6F) causes the engaging protrusions 24a of the engaging ring 24 to move from the second protruding position II to the first protruding position I along the axial direction of the rotational shaft 27 and reach the first protruding position I. At that time, the state between the engaging ring 24 and the first pawl ring 21 becomes "engagement", and the state between the engaging ring 24 and the second pawl ring 22 becomes "disengagement". Therefore, the engaging ring 24 and the first pawl ring 21 that are in "engagement" with each other rotate integrally downward as indicated by the arrows 72, 73 in the same direction, but, between the engaging ring 24 and the second pawl ring 22 that are in "disengagement" from each other, the engaging ring 24 is allowed to rotate regardless of the second pawl ring 22 that is fixed.

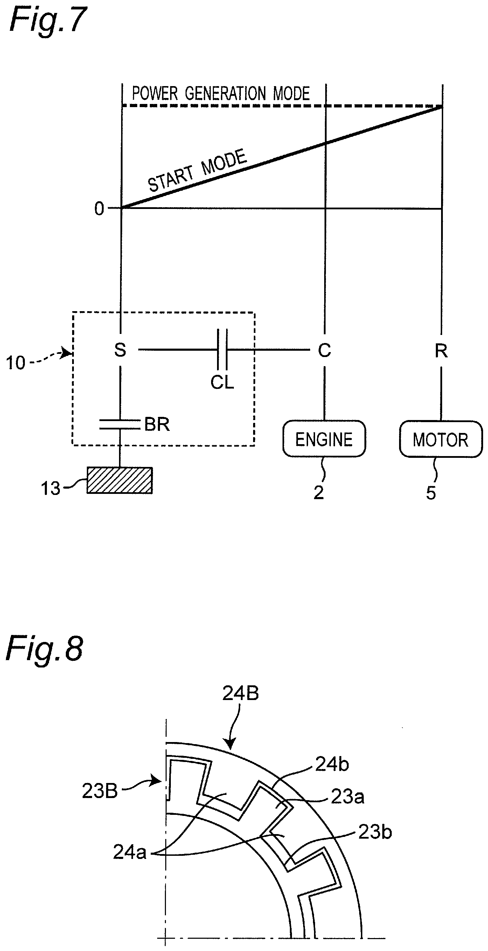

Fig. 7 is a collinear chart showing a state where the power transmitting apparatus with rotary electrical machine is in operation, showing a dynamic relation between a rotation speed and torque of each rotational element. The collinear chart of Fig. 7 is represented by two-dimensional coordinates in which three vertical lines indicate a relation among gear ratios of the sun gear 16, the pinion carrier 19, the ring gear 18 of the planetary gear mechanism 15 as rotational elements from the left in a lateral axis X direction, a vertical axis Y direction indicates a relative rotation speed. A solid line and a dotted line indicate rotation speeds in the start mode and the power generation mode, respectively, that is, indicate rotation speeds of the engine 2 and the rotary electrical machine 5 connected to the output shaft, respectively.

In the start mode, the sun gear 16 stops with a rotation speed set to 0, and rotation reduced in speed is transmitted from the ring gear 18 to the pinion carrier 19.

In the power generation mode, the sun gear 16, the pinion carrier 19, and the ring gear 18 rotate integrally, and the reduction ratio is equal to 1.

A brake element BR between the sun gear 16 and the stationary end 13 and a clutch element CL between the sun gear 16 and the pinion carrier 19 shown in Fig. 7 are achieved by the engagement and disengagement mechanism 10. The engagement and disengagement mechanism 10 constituted of the brake element BR and the clutch element CL allows one rotary electrical machine 5 to satisfy required characteristics that are completely opposite to each other.

That is, in the configuration of the first embodiment, as shown in Fig. 7, in the engine start mode that requires characteristics of a high torque and a low rotation speed, the torque and the rotation speed generated by the rotary electrical machine 5 need to be reduced by the planetary gear mechanism 15 and transmitted to the engine 2 to achieve an excellent starting characteristic. Therefore, the rotation of the rotor 11 of the rotary electrical machine 5 is transmitted to the outer shell of the power transmitting apparatus 3 or the member 8 that rotates synchronously with the outer shell via the ring gear 18, the pinion gears 17, and the pinion carrier 19 of the planetary gear mechanism 15. At this time, in the engagement and disengagement mechanism 10, the sun gear 16 starts to rotate initially along with the rotation of the pinion gears 17, and the first pawl ring 21 starts to rotate in the downward direction (see the arrow 72) shown in Figs. 5A and 6A, and simultaneously, the engaging ring 24 starts to rotate in the upward direction (see the arrow 75) shown in Figs. 5A and 6A. Then, when the engaging protrusions 24a move in the rightward direction (see the arrow 74) to disengage from the first engaging protrusions 21a and then engage with the second engaging protrusions 22a, the engaging ring 24 and the sun gear 16 are stopped rotating. As a result, in a state where the sun gear 16 is fixed, the pinion carrier 19 continues to rotate along with the rotation of the pinion gears 17. Transmission of the rotation of the pinion carrier 19 to the engine 2 causes the rotation of the rotor 11 of the rotary electrical machine 5 that has been reduced in speed by the planetary gear mechanism 15 to be transmitted.

This is a state where the engagement and disengagement mechanism 10 allows the relative rotation between the sun gear 16 and the pinion carrier 19 and restricts the relative rotation between the sun gear 16 and the stationary end 13, and corresponds to a first path of the power transmission paths from the ring gear 18 to the pinion carrier 19 via the pinion gears 17.

On the other hand, after the start of the engine 2 is completed, when a shift is made to the power generation mode that requires characteristics of a low torque and a high rotation speed, the engagement and disengagement mechanism 10 restricts the relative rotation between the components of the planetary gear mechanism 15 to allow the torque and the rotation speed generated by the engine 2 to be transmitted to the rotary electrical machine 5 in a direct coupling state (at a reduction ratio of 1). Therefore, the rotation through the output shaft 7 of the engine 2 is transmitted from the outer shell of the power transmitting apparatus 3 or the member 8 that rotates synchronously with the outer shell to the rotor 11 of the rotary electrical machine 5 via the pinion carrier 19, the pinion gears 17, and the ring gear 18 of the planetary gear mechanism 15. At this time, in the engagement and disengagement mechanism 10, when the pinion gears 17 and the sun gear 16 rotate integrally along with the rotation of the pinion carrier 19, the engaging ring 24 starts to rotate in the downward direction (see the arrow 73) shown in Figs. 5D and 6D, and the engaging protrusions 24a move in the leftward direction (see the arrow 71) to disengage from the second engaging protrusions 22a and engage with the first engaging protrusions 21a, the engaging ring 24 and the first pawl ring 21 rotate integrally.

This is a state where the engagement and disengagement mechanism 10 restricts the relative rotation between the sun gear 16 and the pinion carrier 19 and allows the relative rotation between the sun gear 16 and the stationary end 13, and corresponds to a second path of the power transmission paths from the pinion carrier 19 to the ring gear 18 via the pinion gears 17.

As described above, the first embodiment in which the transmission apparatus 9 is disposed adjacent to the power transmitting apparatus 3 and the rotary electrical machine 5, and at least two power transmission paths having different reduction ratios between the outer shell of the power transmitting apparatus 3 or the synchronous rotation member 8 that rotates synchronously with the outer shell and the rotor 11 of the rotary electrical machine 5 can be mechanically switched, enables the engine 2 and the rotary electrical machine 5 to be coupled with each other without a V-belt and a pulley and accordingly enables a reliable cold start of the engine 2. Further, the first embodiment corresponds to a system that eliminates the need for a mechanism or signal to be controlled from the outside for switching the power transmission paths and utilizes the driving and driven relation that is reversed between the engine start mode and the power generation mode, and makes it possible to achieve the engagement and disengagement mechanism 10 having the other configuration made as simple configuration. Further, as compared with the conventional configuration, integrating the functions of an alternator and a starter motor into the configuration of the first embodiment makes it possible to eliminate the need for components such as a starter motor, a ring gear, a V-belt, and a pulley, and accordingly reduce cost. Further, with the transmission apparatus 9, the above-described integration makes it possible to achieve two characteristics of the low rotation speed and the high torque and the high rotation speed and the low torque that are contradictory to each other by using the one rotary electrical machine 5 and gear transmission in which slippage does not occur even under a low temperature condition, and eliminate the need for a space occupied by components by removing the components to achieve a reduction in size and weight. Further, normally, the planetary gear mechanism 15 is often used in a lubricating oil atmosphere, whereas, in the first embodiment, the planetary gear mechanism 15 is used in the power generation mode in the most part of a period of time during which the vehicle is in operation and is used in the start mode in a very short period of time, which makes it possible to implement the first embodiment even not in the lubricating oil atmosphere. That is, in the power generation mode, since the components of the planetary gear mechanism 15 rotate integrally, that is, there is no rolling occurring between the gears, it is possible to implement the first embodiment even not under the lubricating oil atmosphere. Such features make it possible to simplify a seal, a lubricating structure, and the like, which is excellent in terms of space and cost.

### <Modification>

Note that the present invention is not limited to the embodiment and may be implemented in various other modes. For example, as a modification shown in Fig. 8, positions of a hub ring 23B and an engaging ring 24B in an inside and outside directions may be interchanged. In this modification, an engagement relation between the engaging protrusion 24a and the third depression 23b and an engagement relation between the third protrusion 23a and the fourth depression 24b are merely reversed between the inside and the outside in the radial direction, and the operation is exactly the same as the operation of the first embodiment.

### <Second embodiment>

Further, the engagement and disengagement mechanism 10 is not limited to the mechanism of the first embodiment and may have a different configuration.

For example, as a second embodiment of the present invention, the engagement and disengagement mechanism 10 may include a friction brake 31, a friction clutch 32, and a control mechanism 33 for the friction brake 31 and the friction clutch 32.

For example, the control mechanism 33 may be constituted of, for example, a hydraulic piston or various actuators capable of driving the friction brake 31 and the friction clutch 32 separately based on a timing signal for starting the engine output from a signal circuit or the like.

The friction brake 31 is disposed between the sun gear 16 and the stationary end 13. Application of the friction brake 31 causes the sun gear 16 and the stationary end 13 to be integrated with each other to stop rotation of the sun gear 16 while release of the friction brake 31 allows the sun gear 16 to freely rotate in the normal and reverse directions relative to the stationary end 13. For example, the friction brake 31 is configured to press, in the axial direction, disks and driven plates alternately arranged to stop rotation, and the pressing operation is achieved by a direct push made by a hydraulic piston, or a pushing operation made by an electric actuator via bearings.

The friction clutch 32 is disposed between the sun gear 16 and the pinion carrier 19. The friction clutch 32 connects the sun gear 16 and the pinion carrier 19 to cause the sun gear 16 and the pinion carrier 19 to rotate integrally or releases the connection between the sun gear 16 and the pinion carrier 19 to cause the sun gear 16 and the pinion carrier 19 to rotate separately. For example, the friction clutch 32 is configured to press, in the axial direction, the disks and the driven plates alternately arranged to transmit torque, and the pressing operation is achieved by a direct push made by a hydraulic piston, or a pushing operation made by an electric actuator via bearings.

The control mechanism 33 drives and controls various actuators such as a hydraulic piston or an electric actuator based on a signal from a signal circuit or the like in order to operate the engagement and disengagement of the brake 31 and the clutch 32.

Even such a configuration can exhibit the action effect of the first embodiment.

### <Third embodiment>

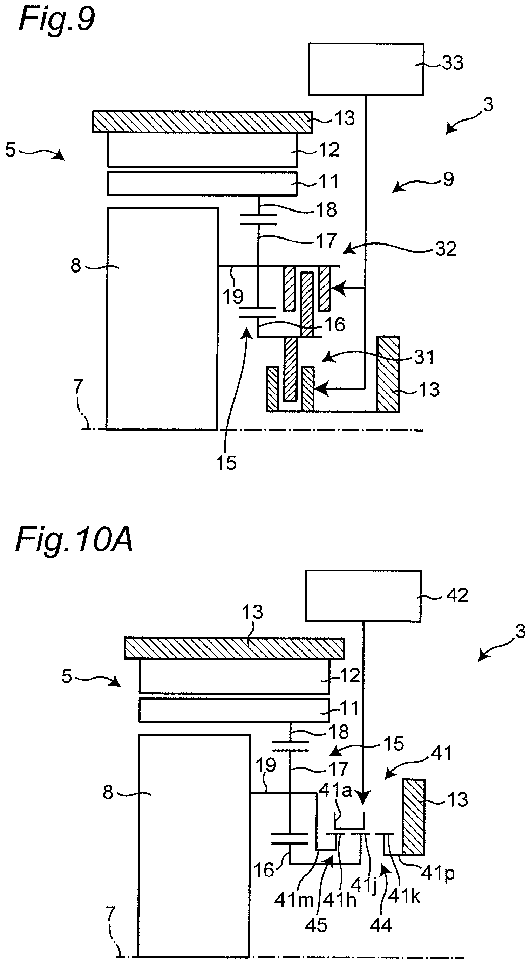

Further, an engagement and disengagement mechanism having a different configuration according to a third embodiment of the present invention shown in Figs. 10A to 10C may include a dog or synchronous clutch 41 and a control mechanism 42 for the clutch 41.

For example, the control mechanism 42 may be constituted of, for example, a hydraulic piston or various actuators capable of driving brake and clutch elements of the dog or synchronous clutch 41 based on a timing signal for starting the engine output from a signal circuit or the like.

A dog or synchromesh (dog or synchronous) brake element 44 is provided between the sun gear 16 and the stationary end 13, and a dog or synchromesh (dog or synchronous) clutch element 45 is provided between the sun gear 16 and the pinion carrier 19.

Further, the control mechanism 42 is provided to operate the engagement and disengagement of the brake element 44 and the clutch element 45.

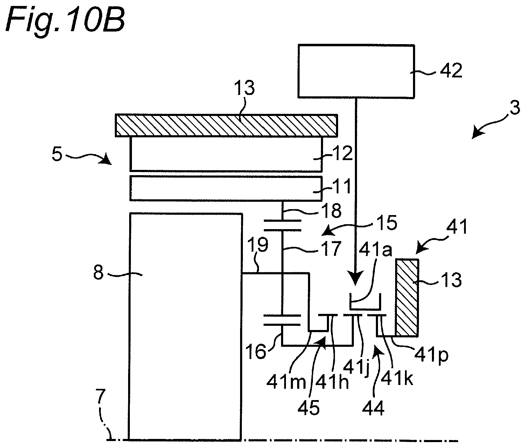

Fig. 10A shows a state where the sun gear 16 and the pinion carrier 19 are synchronized with each other (in other words, "in engagement with each other"), and Fig. 10B shows a state where the sun gear 16 and the stationary end 13 are synchronized with each other. A component that slides laterally in Figs. 10A and 10B is a sleeve 41a.

Here, the synchronizing mechanism is capable of making the engagement and disengagement while absorbing, to some extent, a difference in relative rotation between members to be synchronized. On the other hand, the dog clutch makes the engagement and disengagement after the difference in relative rotation between the members to be synchronized becomes almost zero. The synchronizing mechanism and the dog clutch are different from each other in detailed function and mechanism, but essentially identical to each other in power transmission configuration where engagement is made on a tooth-to-tooth basis unlike a power transmission basis such as a friction clutch. Therefore, description will be collectively given herein with reference to either the dog clutch or the synchronizing mechanism.

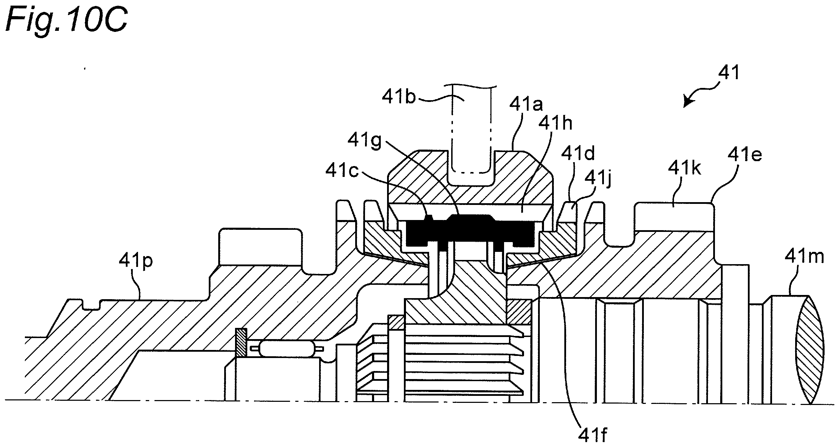

An example of an actual shape of the synchronizing mechanism is shown in Fig. 10C.

When an operation member 41b such as a shift fork starts to move the sleeve 41a rightward in Figs. 10A and 10C, a synchronizer key 41c moves integrally with the sleeve 41a to press, using an end surface thereof, a synchronizer ring 41d against a cone portion 41f of a gear 41e, and a frictional force generated by the pressing action brings rotation of the gear 41e closer in speed to rotation of the sleeve 41a. When the sleeve 41a is further moved, the sleeve 41a and a protrusion 41g of the synchronizer key 41c are out of mesh with each other, and a spline 41h of the sleeve 41a passes over a spline 41j of the synchronizer ring 41d and meshes with a spline 41k of the gear 41e.

That is, at an initial stage of the operation member 41b such as a shift fork, the sleeve 41a is in mesh with the protrusion 41g of the synchronizer key 41c, and the sleeve 41a is out of mesh with the spline 41j of the synchronizer ring 41d. At this time, friction is generated by the pressing action on the synchronizer ring 41d against the cone (circular cone) portion 41f of the gear 41e using the end surface of the synchronizer key 41c to start a synchronizing action.

At an intermediate stage of the operation member 41b such as a shift fork, the sleeve 41a and the protrusion 41g of the synchronizer key 41c is out of mesh with each other, the sleeve 41a and the spline 41j of the synchronizer ring 41d are in contact with each other at their respective tips, and the friction is generated by the synchronizer ring 41d that is pressed by the sleeve 41a to strongly come into pressure-contact with the cone portion 41f of the gear 41e to strengthen the synchronizing action. That is, such a strong pressure-contact operation means "engagement" in the engagement and disengagement mechanism, and a release operation opposite to these operations means "disengagement".

Note that a main shaft connected to the pinion carrier 19 is denoted by 41m, and a clutch shaft fixed to the stationary end 13 is denoted by 41p.

Even such a configuration can exhibit the action effect of the first embodiment.

By appropriately combining arbitrary embodiments or modifications of the above various embodiments or modifications, respective effects can be produced. Additionally, combination between embodiments, combination between working examples, or combination between an embodiment(s) and a working example(s) is possible, and combination between characteristics in different embodiments or working examples is possible as well.

Although the present invention has been fully described in connection with the embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

### INDUSTRIAL APPLICABILITY

The power transmitting apparatus with rotary electrical machine according to the aspect of the present invention allows an increase in the degree of freedom in designing and an increase in the output performance, and is suitable for a power transmitting apparatus with rotary electrical machine that integrates the power generation function and the engine start function of a vehicle's alternator and a vehicle's starter motor.

### REFERENCE SIGNS LIST

1. vehicle
2. engine
3. power transmitting apparatus
4. transmission
5. rotary electrical machine
7. output shaft
8. outer shell of power transmitting apparatus or member that rotates synchronously with outer shell
9. transmission apparatus
10. engagement and disengagement mechanism
11. rotor
12. stator
13. stationary end
15. planetary gear mechanism
16. sun gear
17. pinion gear
18. ring gear
19. pinion carrier
21. first pawl ring
21a. first protrusion
21b. first depression
21c. first annular portion
22. second pawl ring
22a. second protrusion
22b. second depression
22c. second annular portion
23, 23B. hub ring
23a. third protrusion
23b. third depression
23c. third annular portion
24, 24B. engaging ring
24a. engaging protrusion
24b. fourth depression
24c. fourth annular portion
27. rotational shaft of engagement and disengagement mechanism
31. friction brake
32. friction clutch
33. control mechanism
41. dog or synchronous clutch
41a. sleeve
41b. operation member
41c. synchronizer key
41d. synchronizer ring
41e. gear
41f. cone portion
41g. protrusion
41h. spline
41j. spline
41k. spline
41m. main shaft
41p. clutch shaft
42. control mechanism
44. dog or synchromesh brake element
45. dog or synchromesh clutch element
71. movement along leftward arrow
72, 73. rotation along downward arrow
74. movement along rightward arrow
75. rotation along upward arrow
I. first protruding position
II. second protruding position
BR. brake element
CL. clutch element

## Claims

1. A power transmitting apparatus with rotary electrical machine disposed in a power transmission path from an output shaft of an internal combustion engine to a transmission in a vehicle, the power transmitting apparatus comprising:
a rotary electrical machine disposed coaxially with the output shaft; and
a transmission apparatus disposed adjacent to the power transmitting apparatus and the rotary electrical machine, the transmission apparatus being capable of mechanically switching at least two power transmission paths having different reduction ratios between one of an outer shell of the power transmitting apparatus and a synchronous rotation member that rotates synchronously with the outer shell and a rotor of the rotary electrical machine.

2. The power transmitting apparatus with rotary electrical machine according to claim 1, wherein
the transmission apparatus includes:
a planetary gear mechanism disposed coaxially with the output shaft of the internal combustion engine and the rotary electrical machine; and
an engagement and disengagement mechanism that is connected to the planetary gear mechanism,
the planetary gear mechanism includes:
a sun gear;
a pinion gear that meshes with the sun gear;
a pinion carrier that supports the pinion gear with the pinion gear rotatable and is connected to one of the outer shell of the power transmitting apparatus and the synchronous rotation member that rotates synchronously with the outer shell;
a ring gear that is connected to the rotor of the rotary electrical machine to rotate integrally with the rotor, and meshes with the pinion gear; and
a pinion carrier that is connected to one of the outer shell of the power transmitting apparatus and the synchronous rotation member that rotates synchronously with the outer shell to rotate integrally therewith, and supports the pinion gear with the pinion gear rotatable,
the engagement and disengagement mechanism is capable of restricting or allowing relative rotation between the sun gear and the pinion carrier of the planetary gear mechanism, or capable of restricting or allowing relative rotation between the sun gear and a stationary end,
the two power transmission paths include:
a first path that extends from the ring gear that rotates together with the rotor via the pinion gear to the pinion carrier connected to one of the outer shell of the power transmitting apparatus and the synchronous rotation member that rotates synchronously with the outer shell, with the relative rotation between the sun gear and the pinion carrier allowed and the relative rotation between the sun gear and the stationary end restricted by the engagement and disengagement mechanism; and
a second path that extends from the pinion carrier connected to one of the outer shell of the power transmitting apparatus and the synchronous rotation member that rotates synchronously with the outer shell via the pinion gear to the ring gear that rotates together with the rotor, with the relative rotation between the sun gear and the pinion carrier restricted and the relative rotation between the sun gear and the stationary end allowed by the engagement and disengagement mechanism.

3. The power transmitting apparatus with rotary electrical machine according to claim 2, wherein
the engagement and disengagement mechanism includes:
a first pawl ring that is connected to the pinion carrier to rotate together with the pinion carrier and has a first protrusion;
a second pawl ring that is fixed to the stationary end and has a second protrusion;
a hub ring that is connected to the sun gear to rotate together with the sun gear between the first pawl ring and the second pawl ring; and
an engaging ring that is disposed inside or outside the hub ring in a radial direction thereof, engages with the hub ring to rotate integrally with the hub ring in normal and reverse directions and to be movable forward and backward in an axial direction of the rotational shaft, and has an engaging protrusion that engages with one of the first protrusion and the second protrusion and disengages from another of the first protrusion and the second protrusion,
when the first pawl ring rotates in a first direction and the engaging ring rotates in a second direction opposite to the first direction to disengage the first protrusion of the first pawl ring from the engaging protrusion of the engaging ring and allow the first pawl ring to rotate in the normal and reverse directions regardless of the engaging ring, and the engaging protrusion of the engaging ring and the second protrusion of the second pawl ring engage with each other to stop the engaging ring rotating, thus, switch to the first path of the power transmission paths is made, and
when the engaging ring rotates in the first direction to disengage the second protrusion of the second pawl ring from the engaging protrusion of the engaging ring and allow the engaging ring to rotate in the normal and reverse directions, and the engaging protrusion of the engaging ring and the first protrusion of the first pawl ring engage with each other to cause the engaging ring and the first pawl ring to rotate integrally, thus, switch to the second path of the power transmission paths is made.

4. The power transmitting apparatus with rotary electrical machine according to claim 2, wherein
the engagement and disengagement mechanism includes:
a friction brake disposed between the sun gear and the stationary end;
a friction clutch disposed between the sun gear and the pinion carrier; and
a control mechanism that separately controls operation of the friction brake and operation of the friction clutch.

5. The power transmitting apparatus with rotary electrical machine according to claim 2, wherein
the engagement and disengagement mechanism includes:
a dog or synchronous brake element disposed between the sun gear and the stationary end;
a dog or synchronous clutch element disposed between the sun gear and the pinion carrier; and
a control mechanism that separately controls operation of the brake element and operation of the clutch element.

6. The power transmitting apparatus with rotary electrical machine according to any one of claims 1 to 5, wherein the power transmitting apparatus is a friction clutch.

7. The power transmitting apparatus with rotary electrical machine according to any one of claims 1 to 5, wherein the power transmitting apparatus is a torque converter.

8. The power transmitting apparatus with rotary electrical machine according to any one of claims 1 to 5, wherein the power transmitting apparatus is a fluid coupling.

9. The power transmitting apparatus with rotary electrical machine according to any one of claims 1 to 5, wherein the power transmitting apparatus is an electromagnetic clutch.
